# EUROPÄISCHE PATENTSCHRIFT

(11) **EP 0 703 694 B1**
(45) Veröffentlichungstag und Bekanntmachung des Hinweises auf die Patenterteilung: **20.11.2002**
(21) Anmeldenummer: 95114906.1
(22) Anmeldetag: 21.09.1995
(51) Int. Cl.: H04M 11/04, H04M 11/02

(54) **Verfahren zur Betätigung des Öffnungsmechanismus für eine Zugangstür von der Türsprechstelle aus**
Method for operating an access door opening mechanism by means of the interphone
Procédé pour actionner le mécanisme d'ouverture d'une porte d'entrée à partir de l'interphone

(30) Priorität: 23.09.1994 DE 4434083
(43) Veröffentlichungstag der Anmeldung: 27.03.1996
(73) Patentinhaber: SIEMENS AKTIENGESELLSCHAFT, 80333 München (DE)
(72) Erfinder: Müller-Gesser, Hans-Dieter, Dipl.-Ing., D-81379 München (DE); Böttger, Detlev, Dipl.-Ing., D-58239 Schwerte (DE)

(56) Entgegenhaltungen:
- EP-A- 0 021 425
- EP-A- 0 557 778
- FR-A- 2 656 180
- FUNKSCHAU, Nr. 24, 1.November 1982 MUNCHEN DE, Seite 67 RUMPF 'elektronik ruft hilfe'

## Beschreibung

Die Erfindung betrifft ein Verfahren zur von einer Türsprechstelle ausgehenden bedarfsweisen Betätigung des Öffnungsmechanismus für eine Zugangstür zu einem abgeschlossenen Bereich durch eine hierzu berechtigte Person, wobei die Türsprechstelle mit einem Mikrophon, einem Lautsprecher und einer Ruftaste ausgerüstet ist, mit deren Betätigung ein auf die Anwesenheit einer Person an der Türsprechstelle hinweisendes und sinnlich wahrnehmbares Aufmerksamkeitssignal erzeugbar ist und im normalen Betriebsfall über eine Anschlußleitung eine Sprechverbindung zwischen einer entsprechenden Anschlußeinheit und der Türsprechstelle herstellbar ist.

Ein solches Verfahren ist aus EP-A-0 021 425 bekannt.

Durch die Betätigung der Ruftaste an der Türsprechstelle wird innerhalb des abgeschlossenen Bereiches, der z.B. eine Wohnung oder ein sonstiges abgeschlossenes Areal darstellt, ein Aufmerksamkeitszeichen z.B. in Form eines Klingelsignals erzeugt. Eine auf dieses Signal reagierende Person hat dann die Möglichkeit, mit dem Besucher an der Türsprechstelle in eine Sprechverbindung einzutreten. Im Zusammenhang mit einer solchen Türsprechstelle ist es üblicherweise vorgesehen, daß nach Abgabe eines entsprechenden Steuerbefehls der Türöffner aktiviert wird, so daß der Zutritt für die betreffende Person erfolgen kann. Damit ist dann ein gewisses Risiko verbunden, daß auch unerwünschten Besuchern ein Einlaß gewährt wird. Es kann auch ein Fall eintreten, der es einem Nutzer nicht mehr ermöglicht, eigenständig eine Türöffnerfunktion auszulösen, so daß ohne besondere zusätzliche Maßnahmen eine Person, die eine Hilfeleistung erbringen will, der Eintritt verwehrt ist. Es ist beispielsweise bekannt, einen sogenannten Notruf zu einer Notrufzentrale oder auch einer Rettungsleitstelle abzusetzen. Dies erfolgt in der Weise, daß nach Abgabe eines entsprechenden Aktivierungssignals durch eine hilfesuchende Person - wie dies beispielsweise durch einen als sogenannter Funk-Finger bezeichneten Handsender erfolgen kann - durch das Fernsprechendgerät mindestens eine vorab festgelegte externe Anschlußstelle gerufen wird. Dies kann bei einem derartigen Notruf beispielsweise eine von den Wohlfahrtsverbänden betriebene Notrufzentrale oder eine sonstige Rettungsleitstelle sein. Es besteht die Möglichkeit, von dort das rufende Endgerät zu identifizieren bzw. es kann in Verbindung mit einem solchen Notruf nach dem Melden der gerufenen Stelle ein abgespeicherter Ansagetext dem Gerufenen übermittelt werden. Der von der jeweils angesprochenen Organisation, z.B. eine Rettungsleitstelle, zum Hilfesuchenden beorderte Helfer sollte nun die Möglichkeit haben, den Hilfesuchenden erreichen zu können. Grundsätzlich besteht die Möglichkeit, in diesen genannten Organisationen Schlüsselkopien zu hinterlegen. Es kann jedoch für den Helfer sehr zeitaufwendig sein, einen deponierten Schlüssel abzuholen, wenn er beispielsweise mit seinem Rettungsfahrzeug bereits unterwegs ist und - wie es üblich ist - von der gerufenen Stelle über Funk über den eingegangenen Notruf informiert wurde. Anstelle einer Rettungsleitstelle könnte auch ein solcher Notruf für eine andere Stelle, beispielsweise für eine Polizeidienststelle, bestimmt sein. Ein solcher Notruf könnte beispielsweise auch bekannterweise über einen mit dem Fernsprechendgerät drahtgebunden gekoppelten Nottaster ausgelöst werden. Es wird dann beispielsweise dadurch die Information übermittelt, daß ein Unbefugter in das Haus eingedrungen ist. Auch in einem solchen Fall sollte für den Herbeigerufenen die Möglichkeit des problemlosen Zutritts gegeben sein.

Es ist die Aufgabe der Erfindung, im Zusammenhang mit den genannten Problemfällen den Zutritt für vorab vereinbarte Berechtigte durch eine einfache Zutrittskontrolle zu gewährleisten.

Diese Aufgabe wird durch die Merkmale des Anspruches 1 gelöst. Das Wesentliche der Erfindung besteht darin, daß nach einer vorab erfolgten Signalgabe, die beispielsweise in der Auslösung eines Notrufes besteht, der Öffnungsmechanismus für die Zugangstüre automatisch aktiviert wird, wenn sich die zutrittswillige Person vorher durch eine grundsätzlich nur einem Berechtigten bekannte Identifikationsnummer als solchermaßen berechtigt ausgewiesen hat. Der Zutritt kann also ohne ein Sicherheitsrisiko für einen Bewohner erfolgen. Im Falle eines Notrufes wird also z.B. ein kostspieliges Aufbrechen einer Zugangstüre vermieden und es ist auch nicht erforderlich, eine Schlüsselkopie für den betreffenden Teilnehmer zu hinterlegen. Für diese erfindungsgemäße Zutrittskontrolle können-einfache kostengünstige Komponenten eingesetzt werden. Diese sind größtenteils je nach Zugriffsart für die installierte Türsprechstelle bereits vorgesehen und werden zusätzlich mitbenutzt. Dies ist insbesondere dann der Fall, wenn der Zugriff über ein kleines Kommunikationssystem erfolgt, so daß für diese Sicherheitsfunktion die in diesem System bereits vorgesehenen Betriebsmittel und Steuermöglichkeiten herangezogen werden können. Die Steuerung der hierfür notwendigen Abläufe ist zumindest teilweise bereits in einem solchen System integriert. Zur Eingabe der Identifikationsnummer kann eine bereits handelsübliche Sendeeinheit verwendet werden, die beispielsweise als sogenannter "Info-Tip" z.B. zur Abfrage von Sprachspeichern, wie sie beispielsweise Anrufbeantworter darstellen, eingesetzt wird. Die jeweilige Identifikationsnummer ist erfindungsgemäß in der zuständigen Anschlußeinheit gespeichert, so daß die von außen eingegebene Identifikationsnummer auf ihre Richtigkeit hin überprüfbar ist. Durch das erfindungsgemäße Verfahren kann also grundsätzlich auch in einer Situation, in der kein Notfall vorliegt, sichergestellt werden, daß nach einer vorab durch den Bewohner erfolgten Signalgabe durch diese automatische Überprüfung sich keine Person unrechtmäßig einen Zutritt verschafft. In denjenigen Fällen, in denen diese Signalgabe gleichzeitig ein Notrufsignal bedeutet, besteht dann für den herbeigerufenen Helfer in gleicher Weise die Möglichkeit des berechtigten Zutritts.

Weitere vorteilhafte Ausgestaltungen des erfindungsgemäßen Verfahrens sind den restlichen Unteransprüchen zu entnehmen.

Im folgenden wird das erfindungsgemäße Verfahren anhand eines figürlich dargestellten Ausführungsbeispiels erläutert. Es sind lediglich die zum Verständnis der Erfindung notwendigen Komponenten gezeigt.

Im Ausführungsbeispiel ist die Türsprechstelle TS an ein kleines Kommunikationssystem KS neben weiteren Endgeräten angeschlossen. Diese Endgeräte sind stellvertretend durch das Fernsprechendgerät EG dargestellt. Bei einem sogenannten Home-Kommunikationssystem können diese Geräte entsprechend den Bedürfnissen der Benutzer innerhalb einer Wohnung oder eines Hauses auf die unterschiedlichen Räume verteilt sein und es ist der Aufbau von Internverbindungen zwischen den einzelnen Endgeräten sowie gehender und kommender Amtsverkehr möglich. Grundsätzlich könnte die Türsprechstelle TS auch nur mit einem für eine Amtsleitung AL mit dem öffentlichen Fernsprechnetz gekoppelten Fernsprechendgerät verbunden sein. Das erfindungsgemäße Verfahren wäre auch als Zugangskontrolle bei einer Vorrichtung einzusetzen, bei der unabhängig von einer möglichen externen Fernsprechverbindung nur eine Sprechverbindung zu einer Türsprechstelle aufgebaut werden kann.

Das Kommunikationssystem KS besteht im Prinzip aus einzelnen, untereinander verbundenen modularen Einheiten. Als Schnittstelleneinrichtungen zu den Endgeräten und zu der mindestens einen Amtsleitung AL sind Anschaltebaugruppen, symbolisiert durch die Einheiten LA bzw. AS, vorgesehen. Durch sie werden u.a. unterschiedliche Signalisierungsinformationen von den Endgeräten oder dem öffentlichen Fernsprechnetz ÖN auf ein innerhalb des Kommunikationssystems KS einheitlich verwendetes Format umgesetzt. Mit Hilfe der Koppeleinheit KN werden die Sprechverbindungen zwischen den Endgeräten EG untereinander oder zwischen einem Endgerät und dem öffentlichen Fernsprechnetz durchgeschaltet. Weiterhin ist eine zentrale Signalisierungseinrichtung SE angedeutet, die neben dem für die Erzeugung der Hörtöne vorgesehenen Modul H einen für die Erzeugung der Rufspannung zuständigen Ruftongenerator RG enthält. Die von ihm gelieferten Rufsignale werden über eine Rufleitung den Anschaltebaugruppen LA zugeführt und an die jeweilige Anschlußleitung angelegt. Dies erfolgt durch nicht weiter dargestellte Schaltmittel, die jeweils durch eine vorgegebene Rufprozedur gesteuert werden.

Sämtliche modulare Einheiten sind mit einer zentralen Steuerung verbunden. Diese besteht aus dem zentralen Prozessor CPU und der zentralen Speichereinrichtung SPE. Letztere gliedert sich grundsätzlich in einen Kundendatenspeicher KD, einen Programmspeicher P und einen Arbeitsspeicher A. Im Programmspeicher P sind u.a. das Systembetriebsprogramm abgespeichert. In dem Speicherteil KD sind die Kundendaten enthalten. Ein Beispiel hierfür ist die Festlegung, das z.B. in einer ganz bestimmten Situation - die beispielsweise die Auslösung eines Notrufes betrifft - bei der Betätigung des Klingelknopfes TA an der Türsprechstelle im Inneren der Wohnung kein akustisches Aufmerksamkeitszeichen erzeugt werden soll. Der Arbeitsspeicher A dient u.a. der Aufnahme von temporären Daten zur Programmablauf-Steuerung. Durch den zentralen Prozessor CPU werden die Funktionen der einzelnen Einheiten überwacht, diese Einheiten werden zur Ausführung ihrer spezifischen Funktionen angeregt und es werden von diesen Einheiten Daten entgegengenommen. Für das angeschlossene Fernsprechendgerät EG ist eine Tastatur Ta angedeutet. Die Taste Tw symbolisiert die übliche Wähltastatur und durch die Taste Tf soll das Vorhandensein von weiteren Funktionstasten angedeutet werden. Die Tastatur Ta ist mit einer z.B. durch einen Prozessor realisierten Steuereinheit Pe gekoppelt. Durch diese Steuereinheit werden, gegebenenfalls unter Einbeziehung einer weiteren nicht dargestellten Schnittstelleneinheit, diejenigen Signalisierungsinformationen an das Kommunikationssystem KS weitergegeben, die jeweils bei der Betätigung einer der Tasten gebildet werden. Weiterhin werden durch diese Steuereinheit Pe diejenigen Informationen registriert und bewertet, die vom Kommunikationssystem dem Endgerät zur weiteren Verarbeitung übermittelt werden. Hierzu gehören beispielsweise auch Anzeigen auf dem nicht weiter dargestellten Display. Die Einheit Se ist als Speicher ausgebildet und dient beispielsweise der Aufnahme eines Betriebsprogramms für die Steuereinheit Pe und für zwischenzuspeichernde Daten.

Im dargestellten Endgerät EG ist durch die Einheit FS angedeutet, daß ein sogenannter Freisprechbetrieb möglich ist. Mit der Einheit NI soll im Zusammenhang mit der noch zu beschreibenden Auslösung eines Notrufes eine entsprechende Indikation vorgenommen werden.

Diese Notrufindikation NI muß nicht zwangsläufig in einem Endgerät integriert sein, sie kann auch als eigenständige Einheit vorhanden sein, die über eine entsprechende Schnittstelle hinsichtlich ihres Indikationszustandes unmittelbar von der zentralen Steuerung abfragbar ist.

Als Teilnehmer kann über eine Anschlußleitung ASL eine Einheit angeschlossen sein, die als eine Art Sonderendgerät die Funktionen einer sogenannten Tür- bzw. Torsprechstelle TS erfüllt. Über einen Türfreisprechverstärker TFE, der auch die durch die Einheit GS angedeutete Gabelschaltung beinhaltet, ist ein Mikrophon MI und ein Lautsprecher LS angeschlossen. Diese Anschlußleitung wird in gleicher Weise wie die zu den übrigen Endgeräten führenden Anschlußleitungen systemseitig durch eine Gleichspannungs-Versorgungseinheit, die durch die Batterie B symbolisiert ist, gespeist. Im Normalbetriebsfall ist die an der Türfreisprechstelle angeordnete Taste TA von einer Person, die zunächst über diese Sprechstelle kommunizieren will, zu betätigen. Mit dieser Betätigung fließt in der Anschlußleitung ein Schleifenstrom, dessen Wert im wesentlichen durch den Widerstand R2 bestimmt wird. Dieser Widerstand entspricht dem beim Anschluß eines normalen Fernsprechendgerätes auftretenden Leitungsabschlußwiderstand. Mit der Betätigung dieser Taste TA wird somit das Abheben des Handapparates an einem solchen Fernsprechendgerät simuliert. Es fließt über die Anschlußleitung ASL ein Schleifenstrom, der über den Spannungsabfall am Widerstand R1 in der Anschalteeinheit LAa die Indikationsschaltung SK ansprechen läßt. Da die Ausgangsinformation dieser Indikationsschaltung innerhalb eines bestimmten Abfragezyklusses durch den zentralen Prozessor CPU abgefragt wird, wird somit das anfordernde Gerät als Türsprechstelle identifiziert. Üblicherweise wird dann im Zusammenhang mit der Türfreisprechstelle nach deren Identifizierung ein optisches und/oder akustisches Aufmerksamkeitszeichen erzeugt. Dies kann beispielsweise die Betätigung einer Hausklingel sein oder es kann auch im Kundendatenspeicher KD definiert sein, daß in einem solchen Fall ein bestimmtes Endgerät oder auch mehrere gerufen werden.

Meldet sich aufgrund des von der Türsprechstelle aus initiierten Rufsignals oder auch aufgrund der in gleicher Weise verursachten Aktivierung einer gegebenenfalls zentral angeordneten Weck- bzw. Klingeleinrichtung der Teilnehmer am Fernsprechendgerät, so wird eine Sprechverbindung zur Türsprechstelle hergestellt. Im Zusammenhang mit einem solchen Gespräch besteht nun die Möglichkeit, den Türöffnungsmechanismus durch die Betätigung des Türöffnermagneten TM freizugeben. Die hierzu notwendige Signalisierung erfolgt ebenfalls über die Anschlußleitung ASL aufgrund einer z.B. am Endgerät EG erfolgten Informationseingabe.

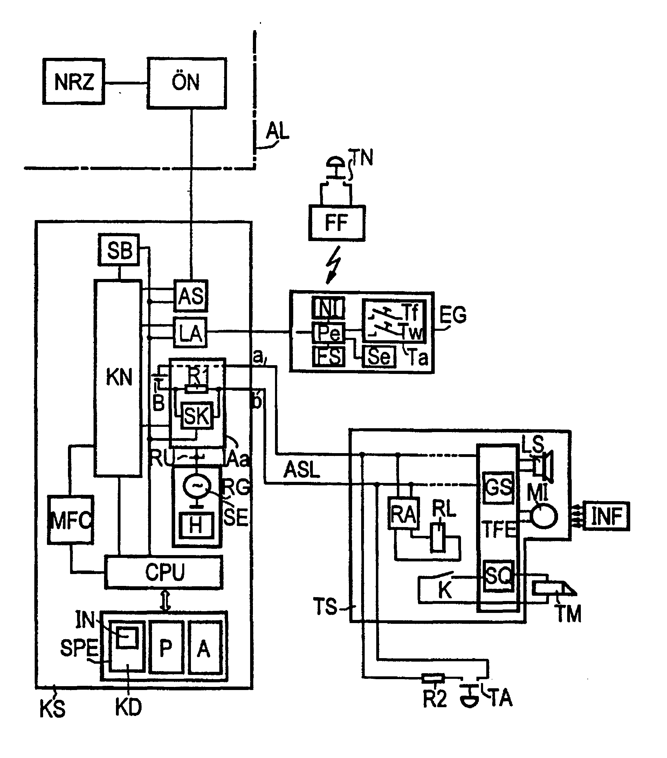

Es besteht auch die Möglichkeit, ohne eine Eingabetätigkeit des Benutzers den Türöffnungsmechanismus freizugeben. Die kann beispielsweise nach der Abgäbe eines Notrufes durch eine dadurch herbeigerufene Person in einer noch zu beschreibenden Art und Weise erfolgen. Die Abgabe eines derartigen Notrufes und die damit verknüpften Notrufprozeduren sind für sich bereits bekannt. Ein derartiger Notruf könnte beispielsweise über eine sogenannte Notruftaste erfolgen. Eine andere, in der Zeichnung angedeutete Möglichkeit besteht darin, einen derartigen Notruf durch einen Handsender auszulösen. Ein derartiger Handsender reagiert als sogenannter Funkfinger FF auf Knopfdruck oder durch Zug an einer Schnur. Diese Möglichkeiten der Aktivierung sind durch die Taste TN symbolisiert. Bei der Betätigung dieser Taste wird ein Funksignal erzeugt, das von der sogenannten Notrufindikation NI aufgenommen und bewertet wird. Im Ausführungsbeispiel ists diese Notrufindikation im Fernsprechendgerät EG integriert. Sie könnte jedoch auch als eigenständige Einheit vorgesehen sein, die mit dem zentralen Prozessor CPU unmittelbar korrespondiert.

Nach dem Ansprechen der Notrufindikation NI wird durch die Steuereinrichtung Pe über die Anschlußeinheit LA der Systemsteuerung eine entsprechende, diesen Notruffall charakterisierende Information übermittelt. Durch die Steuerung wird dann veranlaßt, daß eine Fernsprechverbindung zu mindestens einem vorbestimmten Anschluß aufgebaut wird. Die betreffende Anschlußnummer kann gegebenenfalls als eine von mehreren anzuwählenden Rufnummern im Kundendatenspeicher KD eingespeichert sein. Durch die nach der Auslösung der Notrufprozedur automatisch ausgegebene Rufnummer wird beispielsweise über das öffentliche Fernsprechnetz ÖN eine Notrufzentrale NRZ erreicht. Über die aktivierte Freisprecheinrichtung FS im Endgerät EG könnte sich der Nutzer mit einem Mitarbeiter der Notrufzentrale NRZ verständigen. Falls dies nicht mehr möglich sein sollte, kann vorgesehen sein, daß nach dem Melden des Mitarbeiters in der Notrufzentrale ein im Sprachspeicherbaustein SB eingespeicherter bestimmter Text überspielt wird. Solche handelsüblichen Bausteine speichern die eingegebene Sprachinformation digital und sie beinhalten gleichzeitig als eine Teileinheit die Analog-/Digital- bzw. Digital-/Analog-Wandlung. Im Rahmen der Notrufprozedur wird also durch einen entsprechenden Steuerbefehl aus der Systemsteuerung die Ausgabe des im Sprachspeicherbaustein SB gespeicherten Textes veranlaßt. Diese genannte Notrufzentrale könnte auch eine der sogenannten Hausnotrufdienst-Zentralen oder eine Rettungsleitstelle darstellen. Durch die Notrufzentrale wird aufgrund des Anrufes die Hilfeleistung organisiert. Es kann nun der Fall eintreten, daß kranke oder bedrohte Menschen, die einen solchen Notruf ausgelöst haben, nicht mehr in der Lage sind, die Zugangstür zum Haus oder zur Wohnung zu öffnen. Es gäbe grundsätzlich die Möglichkeit, eine Schlüsselkopie zu hinterlegen, so daß ein Helfer die Zutrittsmöglichkeit hat. Wird von der Notrufzentrale der Notruf an eine mobile Einheit weitergegeben, so müßte in einem solchen Fall der Helfer zunächst zur Notrufzentrale zurück, um die Schlüsselkopie zu übernehmen. Um einen solchen Umweg oder auch ein kostspieliges Türaufbrechen zu vermeiden, besteht nun die Möglichkeit, mit Hilfe einer von der Türsprechstelle aus zu einer Empfangsstelle übermittelten Identifizierungsnummer eine automatische Öffnung zu erreichen. Diese persönliche Identifizierungsnummer wird dem Helfer über Funk oder auch unmittelbar bekanntgegeben. Beim Erreichen des Einsatzortes werden mit Hilfe eines für sich bekannten Mehrfrequenzcode-Zeichensenders, eines sogenannten Info-Tips, die der Identifikationsnummer entsprechenden Zeichen über das Mikrophon MI eingegeben. Grundsätzlich besteht auch die Möglichkeit, statt eines mobilen Mehrfrequenzcode-Zeichensenders INF einen an der Türsprechstelle fest installierten Mehrfrequenzcode-Zeichensender zu benutzen. Im Zusammenhang mit einem Kommunikationssystem KS ist bereits ein Empfänger MFC für diese Mehrfrequenzcode-Zeichen für den Empfang von Wahlinformationen vorhanden. Durch diesen Empfänger werden die über das Mikrophon durch die Einheit INF übermittelten Mehrfrequenzcode-Zeichen aufgenommen und bewertet. Durch die Systemsteuerung wird ein Vergleich der in der geschilderten Weise empfangenen potentiellen Identifikationsnummer mit der im System abgespeicherten aktuellen Identifikationsnummer vorgenommen. Wird durch diesen Vergleich festgestellt, daß eine Übereinstimmung besteht, so erfolgt für diejenige Person, die sich dadurch als berechtigt ausgewiesen hat, die Freigabe des Öffnungsmechanismus der Türe. Grundsätzlich kann der Mehrfrequenzcodeempfänger MFC bereits mit der Abgabe des Notrufsignals vorbereitend an den Koppelweg zur Türsprechstelle angeschaltet werden. Die endgültige Anschaltung könnte dann durch die Betätigung der "Klingeltaste" TA erfolgen. Nach der mit positivem Ergebnis abgeschlossenen Auswertung der durch den Helfer übermittelten Identifikationsnummer kann dann beispielsweise durch die Systemsteuerung an die Leitung ASL eine Rufwechselspannung angelegt werden. Diese Rufwechselspannung wird in der Einheit RA ausgewertet und in eine zur Ansteuerung des Relais RL dienende Gleichspannung umgewandelt. Mit dem Ansprechen des Relais RL durch die angelegte Rufwechselspannung wird der relaiseigene Kontakt k aus der eingezeichneten Ruhelage in die Arbeitslage geschaltet. Damit wird ein Ansprechkreis für den Türöffnermagneten TM geschlossen. Die hierzu notwendige Versorgungsspannung kann beispielsweise aus einem in der Einheit TS integrierten Steckernetzteil geliefert werden. Das zur Verfügung stellen der notwendigen Versorgungsspannung wird durch die Einheit SQ symbolisiert. Dem Helfer wird also nach der über das Mikrophon der Türsprechstelle erfolgten Abgabe der Identifikationsnummer die Tür geöffnet, so daß die Hilfeleistung erfolgen kann. Aus Sicherheitsgründen könnte nach jedem Einsatz diese Identifikationsnummer modifiziert werden.

## Patentansprüche

1. Verfahren zur von einer Türsprechstelle ausgehenden bedarfsweisen Betätigung des Öffnungsmechanismus für eine Zugangstür zu einem abgeschlossenen Bereich durch eine hierzu berechtigte Person, wobei die Türsprechstelle (TS) mit einem Mikrophon (MI), einem Lautsprecher (LS) und einer Ruftaste (TA) ausgerüstet ist, mit deren Betätigung ein auf die Anwesenheit einer Person an der Türsprechstelle hinweisendes und sinnlich wahrnehmbares Aufmerksamkeitssignal erzeugbar ist und im normalen Betriebsfall über eine Anschlußleitung eine Sprechverbindung zwischen einer entsprechenden Anschlußeinheit und der Türsprechstelle herstellbar ist,
**dadurch gekennzeichnet,**
**daß** aufgrund einer von einer Person innerhalb des abgeschlossenen Bereiches bewirkten und von der Anschlußeinheit registrierten besonderen Signalgabe (FF) über die Anschlußleitung eine Verbindung zwischen einem Codeempfänger (MFC) für Mehrfrequenz-Codezeichen und der Türstelle vorbereitet oder hergestellt wird, daß sofern danach vermittels einer Mehrfrequenz-Codezeichen aussendenden Sendeeinheit (INF) derartige, eine vorab festgelegte Identifikationsnummer repräsentierende Zeichen als ein Berechtigungsnachweis erzeugt und von der Türsprechstelle aus an die Anschlußleitung angelegt werden, nach der mit einem positiven Ergebnis abgeschlossenen Auswertung dieser Zeichen ein den Öffnungsmechanismus (TM) der Zugangstüre freigebendes Signal ausgesendet wird, so daß der Zutritt erfolgen kann.

2. Verfahren nach Anspruch 1,
**dadurch gekennzeichnet,**
**daß** die Auswertung durch einen Vergleich der empfangenen, mit dem Mehrfrequenzcodeempfänger (MFC) registrierten und die Ziffernfolge definierenden Zeichen mit dem die vorgegebene abgespeicherte Identifikationsnummer repräsentierenden Zeichen vorgenommen wird und bei Übereinstimmung als positives Prüfergebnis das den Öffnungsmechanismus (TM) der Zugangstüre freigebende Signal erzeugt wird.

3. Verfahren nach Anspruch 1 oder 2,
**dadurch gekennzeichnet,**
**daß** die Anschlußeinheit als Sprechanlage zur Herstellung einer Sprechverbindung mit der Türsprechstelle aufgebaut ist.

4. Verfahren nach Anspruch 1 oder 2,
**dadurch gekennzeichnet,**
**daß** die Anschlußeinheit in einem eine Verbindung zu Anschlüssen des öffentlichen Fernsprechnetzes ermöglichenden Endgerät integriert oder diesem als selbständige Einheit beigestellt ist.

5. Verfahren nach Anspruch 1 oder 2,
**dadurch gekennzeichnet,**
**daß** die Anschlußeinheit Teil einer kleinen Kommunikationsanlage(KS), vorzugsweise einer Home-Anlage, darstellt, daß die Türsprechstelle (TS) als Sonderendgerät mit modifizierter Anschlußart für diese Anlage ausgebildet ist und mindestens ein weiteres daran angeschlossenes Fernsprechendgerät (EG) die Verbindung zu Anschlüssen des öffentlichen Fernsprechnetzes (ÖN) ermöglicht.

6. Verfahren nach einem der Ansprüche 1 bis 3,
**dadurch gekennzeichnet,**
**daß** die besondere Signalgabe als Reaktion auf eine Betätigung der Ruftaste (TA) an der Türsprechstelle (TS) erfolgt.

7. Verfahren nach Anspruch 4 oder 5,
**dadurch gekennzeichnet,**
**daß** die besondere Signalgabe in der Abgabe eines auf drahtlosem und/oder drahtgebundenem Wege zur Anschlußeinheit übermittelten Notrufsignals besteht, daß aufgrund dieses Notrufsignals vermittels des Fernsprechendgerätes (EG) automatisch zumindest ein vorab als Rufinformation eingespeicherter externer Teilnehmeranschluß (NRZ) angewählt wird, so daß der rufende Teilnehmer identifizierbar ist oder eine die Notrufsituation erläuternde Information den betreffenden externen Teilnehmer (NRZ) übermittelbar ist.

8. Verfahren nach Anspruch 7,
**dadurch gekennzeichnet,**
**daß** die dem externen Teilnehmer übermittelte Information in einem abgespeicherten Ansagetext (SB) besteht.

9. Verfahren nach Anspruch 7,
**dadurch gekennzeichnet,**
**daß** der automatisch angewählte externe Teilnehmeranschluß den Anschluß einer für das Erbringen einer Hilfeleistung zuständigen Organisation betrifft.

10. Verfahren nach Anspruch 1,
**dadurch gekennzeichnet,**
**daß** die zur Aussendung der Mehrfrequenz-Codezeichen dienende Sendeeinheit an der Türsprechstelle fest installiert ist.

11. Verfahren nach Anspruch 1,
**dadurch gekennzeichnet,**
**daß** die zur Aussendung der Mehrfrequenz-Codezeichen dienende Sendeeinheit als eigenständige mobile Sendeeinheit (INF) ausgebildet und von einer Person zum bestimmungsgemäßen Gebrauch mitnehmbar ist.

12. Verfahren nach Anspruch 1,
**dadurch gekennzeichnet,**
**daß** in den Fällen, in denen aufgrund der besonderen Signalgabe die automatische Anwahl mindestens eines externen Anschlusses erfolgt, die im normalen Betriebsfall bei Betätigung der Ruftaste an der Türsprechstelle innerhalb des abgeschlossenen Bereiches erfolgende Abgabe eines sinnlich wahrnehmbaren Aufmerksamkeitszeichens unterbindbar ist.

13. Verfahren nach Anspruch 1,
**dadurch gekennzeichnet,**
**daß** bei der vorbereitend erfolgten Verbindung zum Mehrfrequenzcodeempfänger die endgültige wirksame Anschaltung aufgrund der Betätigung der Ruftaste (TA) an der Türsprechstelle (TS) vorgenommen wird.

## Claims

1. Method for operating the opening mechanism for an access door to a closed area, as required from an interphone, by someone who is authorized to do so, with the interphone (TS) being equipped with a microphone (MI), a loudspeaker (LS) and a call button (TA), on whose operation an attention-calling signal can be produced which indicates that someone is present by the interphone and which can be perceived by the human senses, and a speech connection can be produced between an appropriate access unit and the interphone via an access line during normal operation,
**characterized**
**in that** a connection between a code receiver (MFC) for multi-frequency code signals and the door point is provided or set up via the access line on the basis of a special signal (FF) which is produced by someone within the closed area and is registered by the access unit, in that, provided that after this, signals such as this which represent a previously defined identification number are produced as an authorization verification by means of a transmission unit (INF) which transmits multi-frequency code signals, and these are applied to the access line from the interphone, a signal which releases the opening mechanism (TM) of the access door, so as to allow access, is transmitted once the evaluation of these signals has been completed with a positive result.

2. Method according to Claim 1,
**characterized**
**in that** the evaluation is carried out by means of a comparison of the received signals, which are registered with the multi-frequency code receiver (MFC) and define the character sequence, with the signals which represent the predetermined, stored identification number and, if they match, the signal which releases the opening mechanism (TM) of the access door is produced as a positive test result.

3. Method according to Claim 1 or 2,
**characterized**
**in that** the access unit is in the form of a speech unit for producing a speech connection to the interphone.

4. Method according to Claim 1 or 2,
**characterized**
**in that** the access unit is integrated in a terminal which allows a connection to connections of the public telephone network, or is fitted as an accessory to this, as an autonomous unit.

5. Method according to Claim 1 or 2,
**characterized**
**in that** the access unit represents part of a small communications system (KS), preferably a home system,
**in that** the interphone (TS) is in the form of a special terminal with a modified type of connection for this system, and at least one further telephone terminal (EG), which is connected to it, allows the connection for connections of the public telephone network (ÖN).

6. Method according to one of Claims 1 to 3,
**characterized**
**in that** the special signal is produced as a reaction to operation of the call button (TA) on the interphone (TS).

7. Method according to Claim 4 or 5,
**characterized**
**in that** the special signal comprises the emission of an emergency call signal which is transmitted by wire-free means and/or wire-connected means, in that at least one external subscriber connection (NRZ), which is stored in advance as call information, is automatically dialled by means of the telephone terminal (EG) on the basis of this emergency call signal, so that the calling subscriber can be identified or information which explains the emergency call situation can be transmitted to the relevant external subscriber (NRZ).

8. Method according to Claim 7,
**characterized**
**in that** the information which is transmitted to the external subscriber comprises a stored announcement text (SB).

9. Method according to Claim 7,
**characterized**
**in that** the automatically dialled external subscriber connection relates to the connection of an organization which is responsible for providing an ancillary service.

10. Method according to Claim 1,
**characterized**
**in that** the transmission unit which is used for transmitting the multi-frequency code signals is permanently installed in the interphone.

11. Method according to Claim 1,
**characterized**
**in that** the transmission unit which is used for transmission of the multi-frequency code signals is in the form of an autonomous mobile transmission unit (INF) and can be carried by someone for use in accordance with the instructions.

12. Method according to Claim 1,
**characterized**
**in that**, in situations in which at least one external connection is dialled automatically on the basis of the special signal, the emission of an attention-calling signal, which can be perceived by the human senses, and as takes place during normal operation when the call button on the interphone within the closed area is operated, can be suppressed.

13. Method according to Claim 1,
**characterized**
**in that** the final effective connection on the basis of the operation of the call button (TA) on the interphone (TS) is carried out for the connection, which has been made in a preparatory way, for the multi-frequency code receiver.

## Revendications

1. Procédé pour l'actionnement, par une personne habilitée à cet effet, réalisé en cas de besoin depuis un interphone de porte, du mécanisme d'ouverture d'une porte d'accès à une zone fermée, l'interphone de porte (TS) étant équipé d'un microphone (MI), d'un haut-parleur (LS) et d'une touche d'appel (TA) dont l'actionnement permet de créer un signal d'appel perceptible indiquant la présence d'une personne à l'interphone de porte, une liaison vocale entre une unité de raccordement correspondante et l'interphone de porte pouvant être établie en cas normal par un conducteur de raccordement,
**caractérisé en ce que**
lorsqu'un signal spécial (FF) est lancé par une personne située à l'intérieur de la zone fermée et est enregistré par l'unité de raccordement, une liaison entre un récepteur de codes (MFC) de signaux à tonalités codées et l'interphone de porte est préparée ou établie par l'intermédiaire du conducteur de raccordement, **en ce que** sous condition qu'ensuite de tels signaux, qui représentent un numéro d'identification défini préalablement, sont créés au moyen d'une unité d'émission délivrant des signaux à tonalités codées en tant que preuve d'autorisation d'accès et sont appliqués par l'interphone de porte sur le conducteur de raccordement, un signal libérant le mécanisme d'ouverture (TM) de la porte d'accès est émis de manière à permettre l'accès lorsque l'évaluation de ces signaux se termine avec un résultat positif,.

2. Procédé selon la revendication 1, **caractérisé en ce que** l'évaluation est réalisée par une comparaison entre les signaux reçus, enregistrés par le récepteur de tonalités codées (MFC) et définissant une succession de chiffres avec les signes représentant le numéro d'identification prédéterminé conservé en mémoire, et lors de correspondances, le signal libérant le mécanisme d'accès (TM) de la porte d'accès est créé en tant que résultat positif de la vérification.

3. Procédé selon la revendication 1 ou 2, **caractérisé en ce que** l'unité de raccordement est conçue comme installation téléphonique permettant l'établissement d'une liaison vocale avec l'interphone de porte.

4. Procédé selon la revendication 1 ou 2, **caractérisé en ce que** l'unité de raccordement est intégrée dans un appareil terminal permettant une liaison de raccordement au réseau de téléphone public ou est associée à cet appareil terminal, comme unité indépendante.

5. Procédé selon la revendication 1 ou 2, **caractérisé en ce que** l'unité de raccordement constitue une partie d'un petit système de communication (KS), de préférence une installation domestique, **en ce que** l'interphone de porte (TS) est configuré comme appareil terminal spécial doté d'un mode de raccordement modifié à cette installation et au moins un autre appareil téléphonique (EG) qui y est raccordé permettant la liaison de raccordement au réseau de téléphone public (ON).

6. Procédé selon l'une des revendications 1 à 3, **caractérisé en ce que** le lancement d'un signal particulier s'effectue en tant que réaction à un actionnement de la touche d'appel (TA) de l'interphone de porte (TS).

7. Procédé selon la revendication 4 ou 5, **caractérisé en ce que** le lancement d'un signal particulier consiste à lancer un signal d'appel de secours transmis à l'unité de raccordement par une voie sans fil et/ou filaire, **en ce que** suite à ce signal d'appel de secours, au moins un raccordement externe d'abonné (NRZ) conservé préalablement en mémoire à titre d'information d'appel est sélectionné automatiquement au moyen de l'appareil téléphonique (EG), de sorte que l'abonné appelant puisse être identifié ou qu'une information expliquant la situation d'appel de secours puisse être transmise aux abonnés externes concernés (NRZ).

8. Procédé selon la revendication 7, **caractérisé en ce que** l'information transmise à l'abonné externe consiste en un texte vocal (SB) conservé en mémoire.

9. Procédé selon la revendication 7, **caractérisé en ce que** le raccordement d'abonné externe sélectionné automatiquement concerne le raccordement à une organisation responsable de l'exécution de prestations de secours.

10. Procédé selon la revendication 1, **caractérisé en ce que** l'unité d'émission servant à émettre les signes à tonalités codées est intégrée à l'interphone de porte.

11. Procédé selon la revendication 1, **caractérisé en ce que** l'unité d'émission servant à émettre les signaux à tonalités codées est configurée comme unité d'émission mobile autonome (INF) et peut être emportée par une personne pour être utilisée de manière appropriée.

12. Procédé selon la revendication 1, **caractérisé en ce que** dans les cas auxquels, suite à l'envoi d'un signal particulier, la sélection automatique d'au moins un raccordement externe a eu lieu, l'envoi d'un signal d'appel perceptible à l'intérieur de la zone fermée, qui a lieu dans le cas normal lors de l'actionnement de la touche d'appel de l'interphone de porte, peut être supprimé.

13. Procédé selon la revendication 1, **caractérisé en ce que** lorsque la liaison au récepteur de tonalités codées a été effectuée à titre préparatoire, le branchement final effectif s'effectue suite à l'actionnement de la touche d'appel (TA) de l'interphone de porte (TS).
